# EUROPEAN PATENT SPECIFICATION

(11) **EP 2 924 700 B1**
(45) Date of publication and mention of the grant of the patent: **02.05.2018**
(21) Application number: 15160647.2
(22) Date of filing: 24.03.2015
(51) Int. Cl.: H01H 3/28, H01H 13/52, H01H 23/00

(54) **ELECTRONIC SWITCH ASSEMBLY AND CONTROL SYSTEM COMPRISING SUCH SWITCH ASSEMBLY**
ELEKTRONISCHE SCHALTANORDNUNG UND STEUERUNGSSYSTEM MIT SOLCH EINER SCHALTANORDNUNG
ENSEMBLE COMMUTATEUR ÉLECTRONIQUE ET SYSTÈME DE COMMANDE COMPRENANT UN TEL ENSEMBLE

(30) Priority: 25.03.2014 IT MI20140506
(43) Date of publication of application: 30.09.2015
(73) Proprietor: Bticino S.p.A., 21100 Varese (IT)
(72) Inventor: Bernasconi, Danilo, 21013 Gallarate (VA) (IT); Catuozzo, Marco, 22036 Erba (CO) (IT)
(74) Representative: Biallo, Dario

(56) References cited:
- EP-A1- 1 389 854
- FR-A1- 2 934 708
- GB-A- 2 485 805
- US-A1- 2006 238 030

## Description

The present invention refers to an electronic switch assembly and to a control system comprising such switch assembly.

Today, different switch devices are known of the type adapted to be engaged in the frames for closing the device-holder boxes generally embedded in the walls of a room, such boxes containing the so-called system devices i.e. sockets, switch devices and any control or signalling device.

The devices are fixed in reception seats obtained on the closing frames and are connected to the electrical cables that are inserted in the device-holder boxes through pre-fractured walls.

In particular, electronic switch devices are known through which it is possible, for example, not only to turn off or on a light source, but also to adjust the light intensity thereof.

These electronic switch devices comprise, as is known, a box-like body containing the circuits adapted to implement the function for which the devices are intended.

At the face of the box-like body intended to remain visible, a control knob is generally arranged.

In detail, the box-like body comprises at its interior a processing and control unit, for example a microprocessor, which is connected to the control knob in a manner such to control the device on the basis of the actuation of the knob by the user.

It is also known to arrange a frame covering plate that is generally fixed with the closing frame, leaving in view the front part of the switch device in a manner such that the knob remains accessible by a user.

The electronic switch devices have manual actuation that, for example, prevents the opportunity of turning on or off the light source or an assembly of light sources if one is comfortably seated on a couch or anyway in a different room from that where the switch is installed.

In addition, the control knob does not allow setting predefined programs for turning on and off the switch device.

Document GB2485805 discloses a switch assembly comprising:
a frame comprising at least one device engagement seat;
at least one switch device adapted to be engaged in said at least one engagement seat of said frame; said switch assembly further comprising: a covering plate arranged to engage in a removable manner on the visible face of said frame; user interface means adapted to generate an actuation signal corresponding to a user's command;
a processing and control unit connected to said user interface means and configured to control said switch device on the basis of said actuation signal, said processing and control unit, and said user interface means being associated with said covering plate.
Object of the present invention is to overcome the abovementioned drawbacks and in particular that of ideating an electronic switch assembly that can be coupled to the currently-known device-holder boxes and capable of being remotely actuated.

Another object of the present invention is to provide a programmable electronic switch assembly.

Still another object is to obtain a control system for switches which allows remotely controlling an electronic switch.

These and other objects according to the present invention are achieved by obtaining an electronic switch assembly and a control system as set forth in the independent claims.

Further characteristics of the electronic switch assembly and of the control system are the subject of the dependent claims.

The characteristics and advantages of an electronic switch assembly and of a control system according to the present invention will be clearer from the following exemplifying and non-limiting description, referred to the enclosed schematic drawings in which:

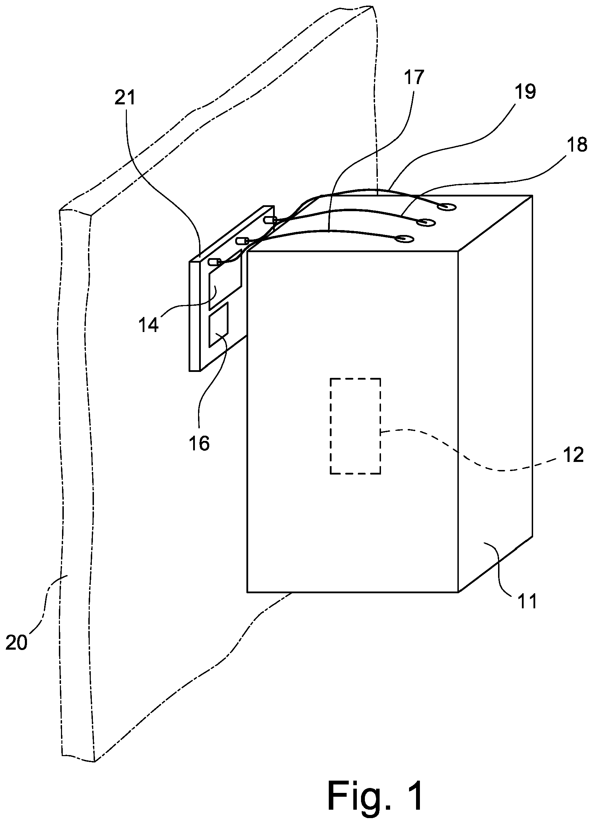

- figure 1 is a perspective schematic view of one embodiment of an electronic switch assembly according to the present invention in which, for the sake of clarity, the closing frame is not illustrated;

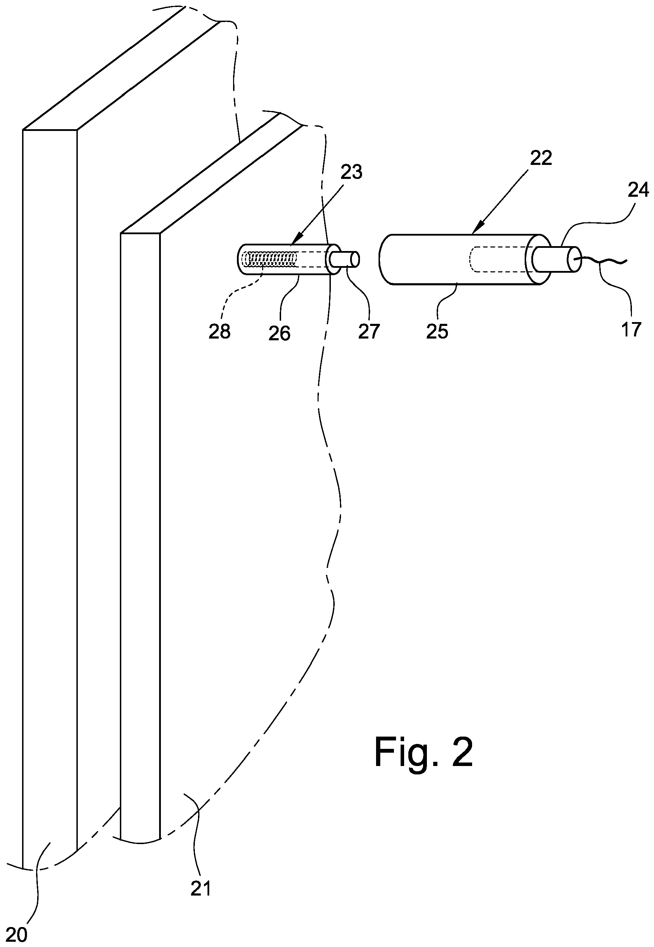

- figure 2 is a schematic view of a detail of the switch assembly of figure 1;
- figure 3 is a block schematic view of a control system according to the present invention.

With reference to the figures, a control system for switches is shown, indicated overall with reference number 30.

Such control system 30 comprises a mobile terminal 31 and an electronic switch assembly 10 associable with a device-holder box (not illustrated).

The mobile terminal 31, in particular, is configured to generate and transmit, to the electronic switch assembly 10, a signal for controlling the status change of the switch.

The mobile terminal 31 can be a *per se* known smart phone or a radio control. In the first case, the mobile terminal 31 is provided with software means, an smartphone application, which allows a user to remotely control the switch by means of his/her cell phone, also allowing the setting of predefined programs.

The electronic switch assembly 10 comprises a closing frame 33 for closing the device-holder box which in turn comprises at least one device engagement seat. In addition, the electronic switch assembly 10 also comprises at least one electronic switch device 11 adapted to engage in the at least one engagement seat of the aforesaid closing frame 33 in a *per se* known manner.

The at least one switch device 11 is also of the type associable with light sources that can be adjustable in terms of intensity and/or colour of the emitted light, for example intensity-adjustable halogen lamps or intensity and colour - adjustable LED lamps. The aforesaid light sources can also be of non-adjustable type and in such case the switch device 11 acts in a manner such to make them pass from the on condition to the off condition and vice versa.

The at least one switch device 11 comprises in its inside a control unit 12 for controlling the device itself arranged not only for making the device pass from the off condition to the on condition and vice versa, but also for carrying out the abovementioned adjustments.

The switch assembly 10 advantageously comprises a covering plate 20 arranged to engage in a removable manner on the visible face of the closing frame 33, in a manner such to hide from view the closing frame 33 and the switch device 11.

According to the present invention, the electronic switch assembly 10 comprises user interface means 13, 14 adapted to generate an actuation signal corresponding to a user's command and a processing and control unit 16 connected to the user interface means 13, 14 and to the control unit 12.

In detail, the processing and control unit 16 is configured to control the device 11 by means of the control unit 12 on the basis of the actuation signal. Advantageously, the processing and control unit 16 and the user interface means 13, 14 are coupled to the covering plate 20, preferably at the internal face of the latter.

If the switch assembly 10 comprises a plurality of switch devices 11, the user can selectively request the turning on/off of each switch device. In detail, the user's command will also contain the information relative to which device to actuate.

Preferably, the user interface means 13, 14 comprise wireless transceiving means adapted to receive the command from the mobile terminal 31.

The wireless transceiving means 14 can be infrared transceivers or antenna assemblies capable of receiving and transmitting signals in accordance with the most different communication protocols, for example Bluetooth protocol, or the protocols that form the basis of Wi-Fi technology, or technologies of wireless transmission at 433 MHz and 868 MHz, or even the Zig-Bee protocol.

Preferably, the user interface means 13, 14 comprise means for recognizing a gesture and/or voice command (not illustrated). In such case, the user interface means 13, 14 can comprise movement sensors, such as for example the pyroelectric sensors, and/or more generally cameras provided with means for analyzing the video images.

Preferably, the user interface means 13, 14 comprise a control touch screen 13 integrated in the covering plate 20; in such case, the control touch screen is also configured to display the status of the switch device 11.

In addition, the control touch screen 13 comprises software means adapted to set predefined programs for controlling the electronic switch device 11. According to such programs, one can for example decide when and for how long to turn on a light source, as well as the luminous intensity level and/or colour at which one desires to set such light source during the turning on period.

Advantageously, the processing and control unit 16 and the user interface means 13, 14 can be associated with a printed circuit board 21 (PCB).

In such case, preferably, the printed circuit board 21 can be applied on the internal face of the covering plate 20. For example, such coupling can be obtained by making, on the internal face of the covering plate 20, coupling portions or reception seats for the printed circuit board 21.

Preferably, the printed circuit board 21, and consequently the processing and control unit 16 and the user interface means 13, 14, is powered by power supply cables 17 and 18 derived from the at least one switch device 11.

In such case, the switch device 11 is in fact provided with terminals through which it is possible to obtain the aforesaid power supply cables 17, 18.

As an alternative or in combination with this embodiment, the at least one printed circuit board 21 is powered by at least one battery or by renewable energy sources, such as, for example, photovoltaic panels or piezoelectric panels. In such case, both the battery and the aforesaid renewable energy sources are associated with the covering plate.

In addition, such processing and control unit 16 is connected to the control unit by means of at least one communication cable 19 derived from the switch device. In this manner, the processing and control unit 16 is capable not only of controlling the control unit but also of detecting the switch status through the aforesaid communication cable 19.

In such case, the processing and control unit 16 can be configured to generate an information signal regarding the switch status and to transmit such signal to the mobile terminal by means of the wireless transceiving means 14. The information signal can then be sent upon reception of a request signal by the terminal 31 itself, or periodically in an automatic manner.

Preferably, the electronic switch assembly 10 comprises visual signalling means (not illustrated) arranged to signal the status of the switch device 11. For example, such visual signalling means can be a warning light that turns on to signal that the device is on.

In a preferred embodiment of the present invention, each of the power supply cables 17, 18 and service cables 19 is at one end shunt connected to the at least one switch device 11 and at the other end is provided with a first connector 22. In such case, the printed circuit board 21 is provided with second connectors 23 arranged for being coupled with the first connectors 22 of the cables. The printed circuit board 21 is provided with at least two second connectors 23 intended to be connected with the first connectors 22 of the power supply cables in a manner such to provide power supply to the processing and control unit 16 and to the user interface means 13, 14.

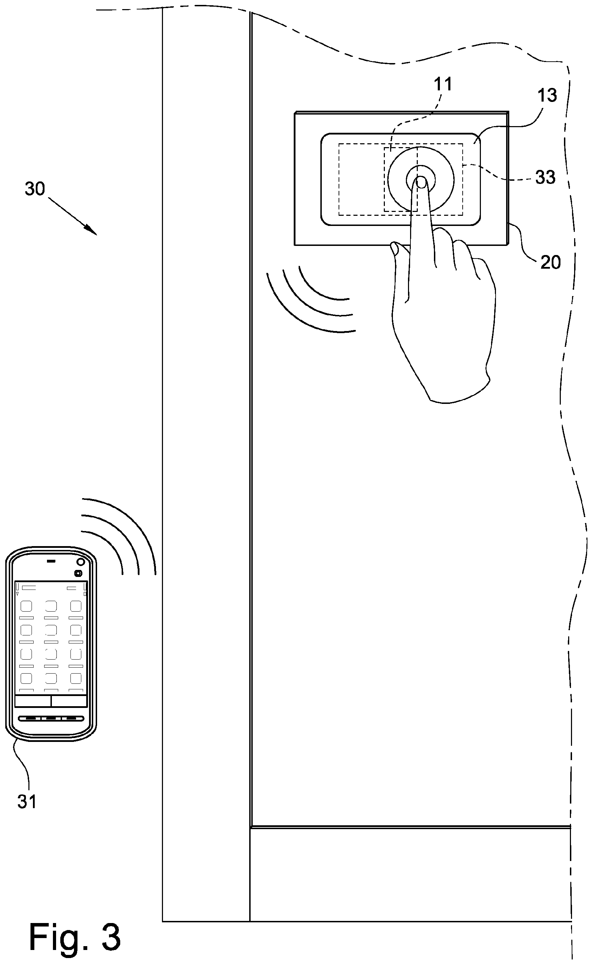

Preferably each first connector 22 comprises, as is visible in figure 3, a metal pin 24 at least partially inserted in an insulating sleeve 25 perforated at the end opposite the insertion end for the metal pin 24. In such case, each second connector 23 comprises an insulating casing 26 with cylindrical symmetry that is open or in any case perforated at the ends. The insulating casing 26 is fixed at one end to the printed circuit board 21. Inside such casing 26, a metal pin 27 is fixed directly or indirectly to the board 21 in a manner such to enter into contact with the power supply lines of the processing and control unit 16 made on the board itself.

In particular, the metal pin 27 can be indirectly connected to the board 21 by means of the interposition of a spring element 28, as is visible in figure 3.

In any case, when a first and a second connector are coupled together, the metal pin 27 penetrates within the insulating sleeve 25 through the hole opposite the metal pin 24, coming into contact with the pin itself. In this manner the pin 24 and the pin 27 act as electrical contacts and allow the passage of electric current.

The operation of the control system for switches and of the electronic switch assembly according to the present invention is as follows.

In particular, for the sake of simplicity reference is made to the case in which the switch assembly 10 is provided with wireless transceiving means 14.

The user, by means of the mobile terminal 31, sends the status change command to the switch assembly 10. Such command is received by the wireless transceiving means 14 which forward to the processing and control unit 16 a corresponding actuation signal. Following the reception of such actuation signal, the processing and control unit 16 controls the control unit in a manner such that the latter actuates the switch device 11 for the change of status.

If the mobile terminal 31 is a smart phone, the user can interrogate the switch assembly 10 in order to learn the status of the switch itself at that moment. In such case, the software means generate a corresponding request signal that is transmitted in a wireless manner to the switch assembly 10.

The processing and control unit 16, following the reception of the request signal, detects the switch status by means of the communication cable 19 and generates a corresponding information signal that is transmitted to the terminal 31 by means of the wireless transceiving means 14.

In this manner, the user can remotely learn the status of the interrogated switch.

From the above description, the characteristics of the switch assembly and of the control system comprising such switch assembly, subject of the present invention, are clear, as are the relative advantages.

Indeed, the switch assembly according to the present invention allows, for example, a user to turn on or off and/or adjust the intensity and/or colour of the light emitted by a light source that is situated in a remote room.

If the user interface means also comprise the control touch screen, the manual control of the device is also ensured, which can be present alongside or as an alternative to the remote control.

## Claims

1. Electronic switch assembly (10) associable with a device-holder box comprising:
- a closing frame (33) for closing said device-holder box, said closing frame (33) comprising at least one device engagement seat;
- at least one electronic switch device (11) adapted to engage in said at least one engagement seat of said closing frame (33) and comprising in its inside a control unit (12) for controlling said electronic switch device (11);
- a covering plate (20) arranged to engage in a removable manner on the visible face of said closing frame (33) in a manner such to hide from view said closing frame (33) and said at least one electronic switch device (11);
- user interface means (13, 14) adapted to generate an actuation signal corresponding to a user's command;
- a processing and control unit (16) connected to said user interface means (13, 14) and to said control unit (12) and configured to control said device (11) by means of said control unit (12) on the basis of said actuation signal, said processing and control unit (16) and said user interface means (13, 14) being associated with said covering plate (20).

2. Electronic switch assembly (10) according to claim 1 wherein said user interface means (13, 14) comprise wireless transceiving means (14) adapted to receive a command from a mobile terminal (31).

3. Electronic switch assembly (10) according to claim 1 or 2 wherein said user interface means (13, 14) comprise means for recognizing a gesture and/or voice command.

4. Electronic switch assembly (10) according to one of the previous claims wherein said user interface means (13, 14) comprise a control touch screen (13) integrated in said covering plate (20), said control touch screen (13) being further configured to display the status of said switch device (11).

5. Switch assembly (10) according to claim 4 wherein said control touch screen comprises software means adapted to set predefined programs for controlling said electronic switch device.

6. Electronic switch assembly (10) according to one of the previous claims wherein said processing and control unit (16) and said user interface means (13, 14) are associated with at least one printed circuit board (21) .

7. Electronic switch assembly (10) according to claim 6 wherein said at least one printed circuit board (21) is powered by power supplying cables (17, 18) derived from said electronic switch device (11) and is connected to said control unit (12) by at least one communication cable (19) derived from said switch device (11).

8. Electronic switch assembly (10) according to one of the previous claims comprising visual signalling means arranged to signal the status of said switch device (11) .

9. Electronic switch assembly (10) according to one of the previous claims wherein said processing and control unit (16) is configured to generate and to transmit to said mobile terminal (31) an information signal regarding the switch status through said wireless transceiving means (14).

10. Control system for switches (30) comprising:
- at least one electronic switch assembly (10) according to one of the previous claims;
- a mobile terminal (31) configured to generate and transmit a user's command to said at least one electronic switch assembly (10) .

11. Control system (30) according to claim 10, wherein said mobile terminal (31) is a smart phone provided with software means allowing a user to remotely control said switch assembly (10) by means of said smart phone.

## Patentansprüche

1. Elektronische Schaltanordnung (10), die einer Gerätehalterbox zugeordnet werden kann, Folgendes umfassend:
- einen Verschlussrahmen (33) zum Verschließen der Gerätehalterbox, wobei der Verschlussrahmen (33) mindestens einen Geräteeingriffssitz umfasst;
- mindestens ein elektronisches Schaltgerät (11), das dafür eingerichtet ist, in den mindestens einen Eingriffssitz des Verschlussrahmens (33) einzugreifen, und das in seinem Inneren eine Steuerungseinheit (12) zur Steuerung des elektronischen Schaltgeräts (11) umfasst;
- eine Abdeckplatte (20), die dafür angeordnet ist, in entfernbarer Weise mit der sichtbaren Fläche des Verschlussrahmens (33) derart einzugreifen, dass der Verschlussrahmen (33) und das mindestens eine elektronische Schaltgerät (11) verborgen sind;
- Benutzerschnittstellenmittel (13, 14), die dafür eingerichtet sind, entsprechend einem Benutzerbefehl ein Betätigungssignal zu erzeugen;
- eine Verarbeitungs- und Steuerungseinheit (16), die mit den Benutzerschnittstellenmitteln (13, 14) und der Steuerungseinheit (12) verbunden und dafür konfiguriert ist, das Gerät (11) mittels der Steuerungseinheit (12) auf der Grundlage des Betätigungssignals zu steuern, wobei die Verarbeitungs- und Steuerungseinheit (16) und die Benutzerschnittstellenmittel (13, 14) der Abdeckplatte (20) zugeordnet sind.

2. Elektronische Schaltanordnung (10) nach Anspruch 1, wobei die Benutzerschnittstellenmittel (13, 14) Mittel zum drahtlosen Senden/Empfangen (14) umfassen, die dafür eingerichtet sind, einen Befehl von einem mobilen Endgerät (31) zu empfangen.

3. Elektronische Schaltanordnung (10) nach Anspruch 1 oder 2, wobei die Benutzerschnittstellenmittel (13, 14) Mittel zum Erkennen einer Geste und/oder eines Sprachbefehls umfassen.

4. Elektronische Schaltanordnung (10) nach einem der vorhergehenden Ansprüche, wobei die Benutzerschnittstellenmittel (13, 14) einen Steuerungs-Touchscreen (13) umfassen, der in die Abdeckplatte (20) integriert ist, wobei der Steuerungs-Touchscreen (13) ferner dafür konfiguriert ist, den Zustand des Schaltgeräts (11) anzuzeigen.

5. Schaltanordnung (10) nach Anspruch 4, wobei der Steuerungs-Touchscreen Software-Mittel umfasst, die dafür eingerichtet sind, festgelegte Programme zur Steuerung des elektronischen Schaltgeräts einzustellen.

6. Elektronische Schaltanordnung (10) nach einem der vorhergehenden Ansprüche, wobei die Verarbeitungs- und Steuerungseinheit (16) und die Benutzerschnittstellenmittel (13, 14) mindestens einer Leiterplatte (21) zugeordnet sind.

7. Elektronische Schaltanordnung (10) nach Anspruch 6, wobei die mindestens eine Leiterplatte (21) von Energieversorgungskabeln (17, 18) versorgt wird, die von dem elektronischen Schaltgerät (11) abgeleitet sind, und durch mindestens ein Kommunikationskabel (19), das von dem Schaltgerät (11) abgeleitet ist, mit der Steuerungseinheit (12) verbunden ist.

8. Elektronische Schaltanordnung (10) nach einem der vorhergehenden Ansprüche, umfassend Mittel zur visuellen Signalisierung, die dafür angeordnet sind, den Zustand des Schaltgeräts (11) zu signalisieren.

9. Elektronische Schaltanordnung (10) nach einem der vorhergehenden Ansprüche, wobei die Verarbeitungs- und Steuerungseinheit (16) dafür konfiguriert ist, ein Informationssignal bezüglich des Schaltzustands zu erzeugen und dieses über die Mittel zum drahtlosen Senden/Empfangen (14) an das mobile Endgerät (31) zu übertragen.

10. Steuerungssystem für Schalter (30), Folgendes umfassend:
- mindestens eine elektronische Schaltanordnung (10) nach einem der vorhergehenden Ansprüche;
- ein mobiles Endgerät (31), das dafür konfiguriert ist, einen Benutzerbefehl zu erzeugen und diesen an die mindestens eine elektronische Schaltanordnung (10) zu übertragen.

11. Steuerungssystem (30) nach Anspruch 10, wobei das mobile Endgerät (31) ein Smartphone ist, das mit Software-Mitteln ausgestattet ist, die es einem Benutzer gestatten, die Schaltanordnung (10) mittels des Smartphones fernzusteuern.

## Revendications

1. Ensemble de commutateur électronique (10) associable à un boîtier de support de dispositif comprenant :
- un cadre de fermeture (33) pour fermer ledit boîtier de support de dispositif, ledit cadre de fermeture (33) comprenant au moins un siège d'engagement de dispositif ;
- au moins un dispositif de commutateur électronique (11) adapté pour s'engager dans ledit au moins un siège d'engagement dudit cadre de fermeture (33) et comprenant dans son intérieur une unité de commande (12) pour commander ledit dispositif de commutateur électronique (11) ;
- une plaque de couverture (20) agencée pour s'engager d'une manière amovible sur la face visible dudit cadre de fermeture (33) de manière à dissimuler ledit cadre de fermeture (33) et ledit au moins un dispositif de commutateur électronique (11) ;
- des moyens d'interface utilisateur (13, 14) adaptés pour générer un signal d'actionnement correspondant à une commande de l'utilisateur ;
- une unité de commande et de traitement (16) connectée auxdits moyens d'interface utilisateur (13, 14) et à ladite unité de commande (12) et configurée pour commander ledit dispositif (11) au moyen de ladite unité de commande (12) sur la base dudit signal d'actionnement, ladite unité de commande et de traitement (16) et lesdits moyens d'interface utilisateur (13, 14) étant associés à ladite plaque de couverture (20).

2. Ensemble de commutateur électronique (10) selon la revendication 1, dans lequel lesdits moyens d'interface utilisateur (13, 14) comprennent des moyens de transmission-réception sans fil (14) adaptés pour recevoir une commande à partir d'un terminal mobile (31) .

3. Ensemble de commutateur électronique (10) selon la revendication 1 ou 2, dans lequel lesdits moyens d'interface utilisateur (13, 14) comprennent des moyens pour reconnaître une commande gestuelle et/ou vocale.

4. Ensemble de commutateur électronique (10) selon une des revendications précédentes, dans lequel lesdits moyens d'interface utilisateur (13, 14) comprennent un écran tactile de commande (13) intégré dans ladite plaque de couverture (20), ledit écran tactile de commande (13) étant configuré en outre pour afficher l'état dudit dispositif de commutateur (11).

5. Ensemble de commutateur (10) selon la revendication 4, dans lequel ledit écran tactile de commande comprend des moyens logiciels adaptés pour établir des programmes prédéfinis pour la commande dudit dispositif de commutateur électronique.

6. Ensemble de commutateur électronique (10) selon une des revendications précédentes, dans lequel ladite unité de commande et de traitement (16) et lesdits moyens d'interface utilisateur (13, 14) sont associés à au moins une carte de circuit imprimé (21).

7. Ensemble de commutateur électronique (10) selon la revendication 6, dans lequel ladite au moins une carte de circuit imprimé (21) est alimentée par des câbles d'alimentation électrique (17, 18) provenant dudit dispositif de commutateur électronique (11) et est connectée à ladite unité de commande (12) par au moins un câble de communication (19) provenant dudit dispositif de commutateur (11).

8. Ensemble de commutateur électronique (10) selon une des revendications précédentes, comprenant des moyens de signalisation visuelle agencés pour signaler l'état dudit dispositif de commutateur (11).

9. Ensemble de commutateur électronique (10) selon une des revendications précédentes, dans lequel ladite unité de commande et de traitement (16) est configurée pour générer et transmettre audit terminal mobile (31) un signal d'information concernant l'état de commutateur par le biais desdits moyens de transmission-réception sans fil (14).

10. Système de commande pour commutateurs (30) comprenant :
- au moins un ensemble de commutateur électronique (10) selon une des revendications précédentes ;
- un terminal mobile (31) configuré pour générer et transmettre une commande de l'utilisateur audit au moins un ensemble de commutateur électronique (10).

11. Système de commande (30) selon la revendication 10, dans lequel ledit terminal mobile (31) est un téléphone intelligent muni de moyens logiciels permettant à un utilisateur de commander à distance ledit ensemble de commutateur (10) au moyen dudit téléphone intelligent.
